# EUROPEAN PATENT SPECIFICATION

(11) **EP 3 002 158 B1**
(45) Date of publication and mention of the grant of the patent: **28.02.2018**
(21) Application number: 15186242.2
(22) Date of filing: 22.09.2015
(51) Int. Cl.: B60R 11/04, G06T 7/20

(54) **REARVIEW CAMERA WITH GPS FOR IMAGE STORAGE AND RETRIEVAL**
HECKKAMERA MIT GPS ZUR BILDSPEICHERUNG UND -WIEDERAUFFINDUNG
CAMÉRA DE RÉTROVISEUR DOTÉE D'UN GPS POUR STOCKAGE ET RÉCUPÉRATION D'IMAGES

(30) Priority: 03.10.2014 US 201414505797
(43) Date of publication of application: 06.04.2016
(73) Proprietor: Delphi Technologies, Inc., Troy, MI 48007 (US)
(72) Inventor: FAIRCHILD, Manuel Ray, Kokomo, Indiana 46902 (US)
(74) Representative: Robert, Vincent

(56) References cited:
- EP-A1- 1 901 225
- EP-A1- 2 492 871
- EP-A2- 1 830 321
- JP-A- 2010 086 266
- JP-A- 2013 218 571

## Description

### TECHNICAL FIELD OF INVENTION

This disclosure generally relates to rearview camera system, and more particularly relates to the system using a global-position-system (GPS) device to determine if a current image of a location is different from a prior image of the same location, and indicate if an unexpected object is present in the current image.

### BACKGROUND OF INVENTION

It is known to equip a vehicle with a back-up or rearview camera so an operator can more readily observe if an unexpected object is behind the vehicle. Document EP2492871 A1 relates to 3D object detection and corresponds to the preamble of claim 1. However, poor operator eyesight and hurried driving habits can lead to operator failure to detect an unexpected object.

### SUMMARY OF THE INVENTION

In accordance with the invention, a rearview camera according to claim 1 is provided

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a side view of vehicle equipped with a system configured to detect an unexpected object proximate to the vehicle in accordance with one embodiment;
Fig. 2 is a diagram of the system of Fig. 1 in accordance with one embodiment;
Fig. 3 is an example scene of the area behind the vehicle of Fig. 1 in accordance with one embodiment;
Fig. 4 is an example scene of the area behind the vehicle of Fig. 1 in accordance with one embodiment; and
Fig. 5 is an example of an image displayed by the system of Fig. 1 in accordance with one embodiment.

### DETAILED DESCRIPTION

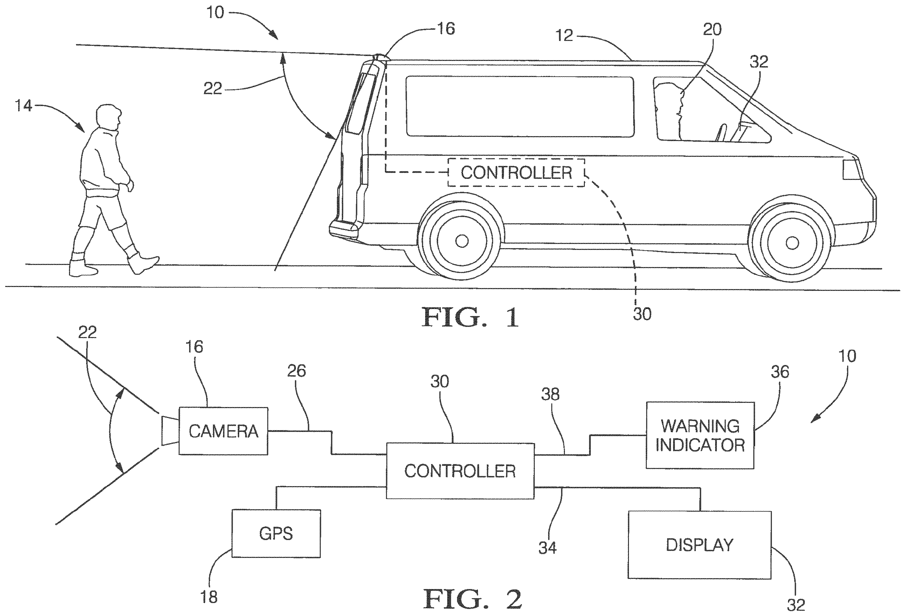

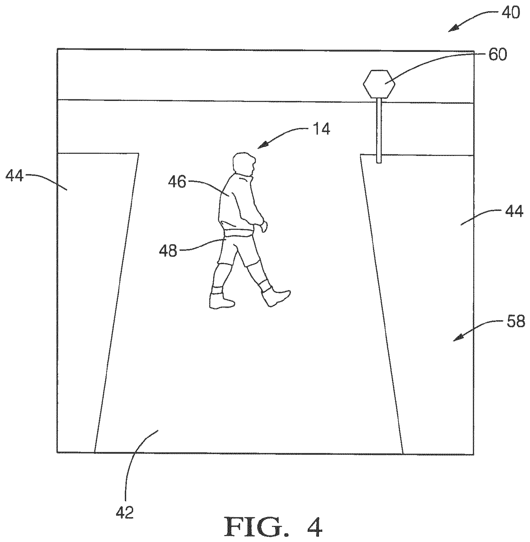

Fig. 1 illustrates a non-limiting example of a rearview camera system, hereafter referred to as the system 10, suitable for use on a vehicle 12 for detecting an object, particularly an unexpected object 14, behind a vehicle 12. As will be explained in more detail below, the system 10 is generally configured to provide an operator 20 of a vehicle 12 a notification that an unexpected object 14 is proximate to the vehicle 12. In this example, the unexpected object 14 is a child walking behind the vehicle 12. The system 10 is also useful to detect an adult, an animal, other vehicle, or any obstruction with which the vehicle 12 may collide. The system 10 includes a camera 16 configured to capture a current image 40 (Fig. 4) from a field-of-view 22 proximate to (e.g. behind) the vehicle 12. In general, the camera 16 is mounted on the vehicle 12 so the field-of-view 22 useful to detect objects that may not be readily seen by the operator 20. In this non-limiting example, the field-of-view 22 is directed behind the vehicle 12. However, it is contemplated that the system 10 could be configured to detect an object beside or in front of the vehicle 12.

Fig. 2 further illustrates a non-limiting example of the system 10. The camera 16 is generally configured to output image data 26 indicative of visible light color (e.g. hue and saturation) and visible light intensity detected by pixels (not shown) in the camera 16. A suitable resolution for the camera may be provide by a pixel array characterized as 640 by 480 for a total of 307,200 pixels. Cameras of higher and lower resolution are commercially available from a wide variety of sources. The camera needs to have sufficient resolution so when the image data 26 is displayed to the operator 20, there is sufficient detail for the operator 20 to discern what is being displayed.

The system 10 also includes a global-position-system device, hereafter the GPS device 18, configured to determine a current location 56 of the current image 40. The current location 56 may be characterized by, but is not limited to, GPS coordinates and/or an orientation of the vehicle 12 (i.e. the direction the vehicle is facing), as will be recognized by those in the art. A suitable GPS device is readily available from a wide variety of commercial sources.

Continuing to refer to Figs. 1 and 2, the system 10 may include a controller 30 configured to receive image data 26 from the camera 16, and GPS data 28 from the GPS device 18. The controller 30 may include a processor (not shown) such as a microprocessor or other control circuitry as should be evident to those in the art. The controller 30 may include memory (not shown), including non-volatile memory, such as electrically erasable programmable read-only memory (EEPROM) for storing one or more images from the camera 16, locations from the GPS device 18, routines, thresholds and the like. The one or more routines may be executed by the processor to perform steps for processing signals received by the controller 30 for combining or fusing the image data 26 and the GPS data 28 as described herein.

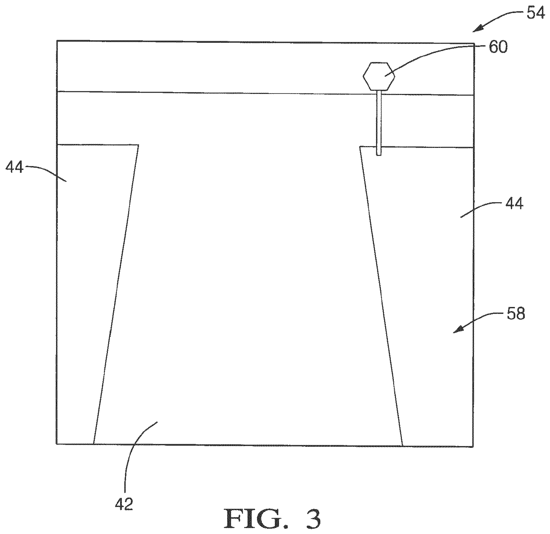

The GPS device 18 is utilized by the controller 30 to determine if the current location 56 (Fig. 4) corresponds to a prior location 58 (Fig. 3). If the current location 56 and the prior location 58 correspond, i.e. are essentially the same, it is expected that the prior image 54 and the current image 40 will essentially match. If the locations correspond, the controller 30 compares a prior image 54 of the prior location 58 that was previously stored in the controller 30 to the current image 40 being received from the camera 16. If the images do not match, i.e. there is an unexpected object 14 in the current image 40, the system 10 is configured to indicate that the unexpected object 14 is present in the current image 40, and may convey this indication in a number of ways, as will be explained in more detail later. Video image subtraction / comparison software is commercially available that would be suitable for comparing the prior image 54 to the current image 40 to determine if the unexpected object 14 is present in the field-of-view 22.

The system 10 may also include a display 32 configured to display an image to the operator 20 that corresponds to a display signal 34 output by the controller 30. Devices suitable for the display 32 are commercially available. The display 32 may be located anywhere in the vehicle 12 where the operator 20 can readily view the display 32; for example as part of an instrument display panel directly forward of the operator 20, or as part of a centralized instrumentation arrangement between the operator seat and passenger seat, or as part of a rearview mirror assembly. The system 10 may also include a warning indicator 36 such as an indicator light, audible alarm, or vibrating device coupled to the steering wheel or the operator's seat. In general, the warning indicator 36 is configured to receive a warning signal 38 from the controller 30, and in response to the warning indicator 36 output a light, sound, haptic, or other action to attract the attention of the operator 20 when the unexpected object 14 is detected in the current image 40.

Fig. 3 is a non-limiting example of a prior image 54 from the camera 16 that was stored by the controller 30. The system 10 may be configured so the operator 20 can review the prior image 54 and designated part of the prior image 54 as an excluded area 44, and/or part of the prior image 54 as an area-of-interest 42. In this example, the area-of-interest 42 is a driveway behind the vehicle 20, and the excluded area 44 is a lawn adjacent to the driveway. The excluded area 44 may include an expected or known object 60, such as a mailbox. By designating part of the prior image 54, the controller 30 is able to more quickly align and compare the current image 40 to the prior image 54 to determine if an unexpected object 14 (Fig. 4) is present. In other words, the system 10 is configured to ignore the known object 60 in the excluded area 44 of the prior image 54.

The system 10 may be configured so the operator 20 can designate what part of the prior image 54 is the excluded area 44 of the prior image 54 by, for example, having the display 32 be a touch screen type display, and the system 10 be operable so the operator 20 can wipe a finger across the excluded area when shown on the display. Alternatively, the system 10 may automatically determine what part of the prior image 54 is the excluded area 44 based on an expected or previously detected travel path of the vehicle 12.

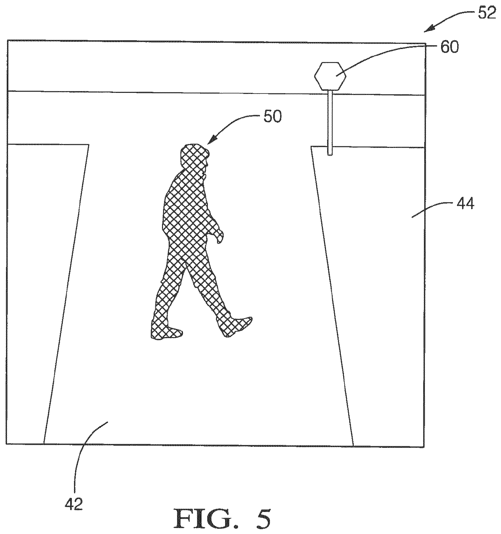

Fig. 5 shows a non-limiting example of a highlighted image 52 as the current image 40 could appear on the display 32 where the unexpected object is displayed as a highlighted object 50. The highlighted object 50 may be emphasized by overlaying a contrasting color (e.g. red), or by varying the intensity of the highlighted object in a step-wise manner (e.g. bright-dark-bright-etc.) in order to emphasize the unexpected object shown in the current image to be more readily detected by the operator 20.

Accordingly, a rearview camera system (the system 10), and a controller 30 for the system 10 is provided. By using the GPS data 28 to detect locations frequented by the vehicle 12 (e.g. the operator's garage or workplace parking space), prior images of those locations can be stored by the controller 30 and then later compared to the current image 40 from the camera 16 to more readily determine if an unexpected object 14 is proximate to or in the expected travel path of the vehicle 12.

While this invention has been described in terms of the preferred embodiments thereof, it is not intended to be so limited, but rather only to the extent set forth in the claims that follow.

## Claims

1. A rearview camera system (10) for detecting an unexpected object (14) behind a vehicle (12), said system (10) comprising:
a camera (16) configured to capture a current image (40) from a field-of-view (22) proximate to a vehicle (12); **characterized in that** it further comprises
a global-position-system (GPS) device (18) configured to determine a current location (56) of the current image (40);
a controller (30) comprising a memory configured to store said location (56) of said image (40) and said image (40, 54) from camera;
wherein the controller (30) is configured
to combine the stored location (56, 58) with the stored image (40, 54),
to determine if the current location (56) of the current image (40) corresponds to a prior location (58) of a prior image (54) that was previously stored in the controller (30),
to compare the prior image (54) to the current image (40) when current location (56) corresponds to prior location (58), and
to indicate, when the prior image (54) and the current image (40) do not match, that an unexpected object (14) is present in the current image (40).

2. The system (10) in accordance with claim 1, wherein the system (10) includes a warning indicator (36), and the controller (30) is further configured to activate the warning indicator (36) if the unexpected object (14) is present in the current image (40).

3. The system (10) in accordance with claim 1 or 2, wherein the system (10) includes a display (32) configured to show the current image (40), and emphasize the unexpected object (14) shown in the current image (40).

4. The system (10) in accordance with any one of claims 1 to 3, wherein the system (10) is configured to ignore a known object (60) in an excluded area (44) of the prior image (54).

5. The system (10) in accordance with claim 4, wherein the system (10) is configured so an operator (20) can designate the excluded area (44) of the prior image (54).

## Patentansprüche

1. Rückblickkamerasystem (10) zum Erfassen eines unerwarteten Objekts (14) hinter einem Fahrzeug (12), wobei das System (10) aufweist:
eine Kamera (16), die konfiguriert ist zum Aufnehmen eines aktuellen Bilds (40) aus einem Sichtfeld (22) in der Nähe eines Fahrzeugs (12); **dadurch gekennzeichnet, dass** es weiter aufweist:
eine globales-Positionsbestimmungssystem(GPS - global position system)-Vorrichtung (18), die konfiguriert ist zum Bestimmen einer aktuellen Position (56) des aktuellen Bilds (40);
eine Steuervorrichtung (30), die einen Speicher aufweist, der konfiguriert ist zum Speichern der Position (56) des Bilds (40) und des Bilds (40, 54) von der Kamera;
wobei die Steuervorrichtung (30) konfiguriert ist zum
Kombinieren der gespeicherten Position (56, 58) mit dem gespeicherten Bild (40, 54),
Bestimmen, ob die aktuelle Position (56) des aktuellen Bilds (40) einer früheren Position (58) eines früheren Bilds (54) entspricht, die zuvor in der Steuervorrichtung (30) gespeichert wurde,
Vergleichen des früheren Bilds (54) mit dem aktuellen Bild (40), wenn die aktuelle Position (56) der früheren Position (58) entspricht, und
Angeben, wenn das frühere Bild (54) und das aktuelle Bild (40) nicht übereinstimmen, dass ein unerwartetes Objekt (14) in dem aktuellen Bild (40) vorhanden ist.

2. Das System (10) gemäß Anspruch 1, wobei das System (10) einen Warnindikator (36) umfasst und die Steuervorrichtung (30) weiter konfiguriert ist zum Aktivieren des Warnindikators (36), wenn das unerwartete Objekt (14) in dem aktuellen Bild (40) vorhanden ist.

3. Das System (10) gemäß Anspruch 1 oder 2, wobei das System (10) eine Anzeige (32) umfasst, die konfiguriert ist zum Zeigen des aktuellen Bilds (40) und Hervorheben des unerwarteten Objekts (14), das in dem aktuellen Bild (40) gezeigt wird.

4. Das System (10) gemäß einem der Ansprüche 1 bis 3, wobei das System (10) konfiguriert ist, ein bekanntes Objekt (60) in einem ausgeschlossenen Bereich (44) des vorherigen Bilds (54) zu ignorieren.

5. Das System (10) gemäß Anspruch 4, wobei das System (10) konfiguriert ist, dass ein Bediener (20) den ausgeschlossenen Bereich (44) des vorherigen Bilds (54) bezeichnen kann.

## Revendications

1. Système à caméra dirigée vers l'arrière (10) pour détecter un objet inattendu (14) derrière un véhicule (12), ledit système (10) comprenant :
une caméra (16) configurée pour capturer une image actuelle (40) depuis un champ de vision (22) à proximité d'un véhicule (12) ; **caractérisé en ce qu'**il comprend en outre
un dispositif de système de positionnement global (GPS) (18) configuré pour déterminer un emplacement actuel (56) de l'image actuelle (40) ;
un contrôleur (30) comprenant une mémoire configurée pour stocker ledit emplacement (56) de ladite image (40) et ladite image (40, 54) provenant de la caméra ;
dans lequel le contrôleur (30) est configuré
pour combiner l'emplacement stocké (56, 58) avec l'image stockée (40, 54), pour déterminer si l'emplacement actuel (56) de l'image actuelle (40) correspond à un emplacement antérieur (51) d'une image antérieure (54) qui a été antérieurement stockée dans le contrôleur (30),
pour comparer l'image antérieure (54) à l'image actuelle (40) quand l'emplacement actuel (56) correspond à l'emplacement antérieur (58), et
pour indiquer, quand l'image antérieure (54) et l'image actuelle (40) ne s'accordent pas, qu'un objet inattendu (14) est présent dans l'image actuelle (40).

2. Système (10) selon la revendication 1, dans lequel le système (10) inclut un indicateur d'avertissement (36), et le contrôleur (30) est en outre configuré pour activer l'indicateur d'avertissement (36) si l'objet inattendu (14) est présent dans l'image actuelle (40).

3. Système (10) selon la revendication 1 ou 2, dans lequel le système (10) inclut un affichage (32) configuré pour montrer l'image actuelle (40), et pour mettre en évidence l'objet inattendu (14) montré dans l'image actuelle (40).

4. Système (10) selon l'une quelconque des revendications 1 à 3, dans lequel le système (10) est configuré pour ignorer un objet connu (60) dans une zone exclue (44) de l'image antérieure (54).

5. Système (10) selon la revendication 4, dans lequel le système (10) est configuré de telle façon qu'un opérateur (20) peut désigner la zone exclue (44) de l'image antérieure (54).
